# EUROPEAN PATENT APPLICATION

(11) **EP 4 456 003 A1**
(43) Date of publication of application: **30.10.2024**
(21) Application number: 23169883.8
(22) Date of filing: 25.04.2023
(51) Int. Cl.: G06T 19/00, G06F 16/957

(54) **METHOD AND SYSTEM FOR PROVIDING SEAMLESS INTEROPERABILITY ACROSS APPLICATIONS INSIDE AND OUTSIDE METAVERSE**

(71) Applicant: Siemens Aktiengesellschaft, 80333 München (DE)
(72) Inventor: Singh, Saurabh Narayan, 81739 München (DE); Zeiner, Katharina, 70569 Stuttgart (DE)
(74) Representative: Siemens Patent Attorneys

(57) **Abstract**

A method for providing computer-implemented seamless interoperability across applications inside and outside metaverse is described. The method comprises the steps of:
a) reading, by a first device (D1) executing a first application (APL1), a component information (CI) from a data storage (CSS), where the component information (CI) has been created upon creation of a metaverse or non-metaverse component by a second application (APL2) executed by a second device (D2) and where the component information (CI) comprises component details data (CD) and metadata (MD) of the created component, the first and the second application (APL1, APL2) either being a non-metaverse application running on the first or second device (D1, D2) or being a metaverse application running on an execution logic (EB);
b) processing, by the first device (D1) executing the first application (APL1), the component, where the processing results in changed component information (CI);
c) updating the component information (CI) in the data storage (CSS).

## Description

Independent of the grammatical term usage, individuals with male, female or other gender identities are included within the term.

The present invention relates to a method for providing computer-implemented seamless interoperability across applications inside and outside metaverse. The invention further relates to a computer program product and a corresponding system for carrying out the method according to the invention.

The metaverse, as being imagined currently, will be a universe of augmented reality (AR) applications and virtual reality (VR) applications where users can interact with each other in a virtual world while being an active participant in it. As one example, a user can order an item of clothes in a shop, try it over the virtual counterpart to imagine and experience how it would look like and then order it. The same also extends in the digital and enterprise environment of internet of things (IoT) devices.

The challenge, though, is that the metaverse as being imagined to be linked to an existing web application or mobile application. In such a version, the user would face a constant disconnect between their experience on the website running on an end user device and their experience while inside the metaverse. For example, when a user intends to buy a new tool or machine, identifying a tool, which fits a given room, based on AR, and then experiencing it in a new room inside VR should be possible.

The same challenges would also exist for applications inside the metaverse. For example, if a user wants to create a version of an application inside one instance of metaverse and then wants to use it on another device, in a different application, the expected flow will be disrupted.

Users who are already part of an ecosystem of an application via existing tools like websites or mobile phone applications might not migrate completely to metaverse anytime soon. Thus, there needs to be a capability for the user to mix their experience in a real world along with that in the metaverse. With the lack of such experience, it will delay the user onboarding and acceptance of the metaverse.

It is an object of the present invention, to provide a method which enables seamless interoperability across applications inside and outside metaverse. It is a further object of the present invention to provide a system which is configured to perform the method according to the invention.

These objects are solved by a method according to the features of claim 1, and a system according to the features of claim 11. Preferred embodiments are set out in the dependent claims.

According to the invention, a method for provided computer-implemented seamless interoperability across applications inside and outside metaverse is suggested. The method comprises the following steps:
In a step a), a component information is read from a data storage by a first device executing a first application. The component information has been created upon creation of a metaverse or non-metaverse component by a second application executed by a second device. The component information comprises component details data and metadata of the created component. The first and the second application may be a non-metaverse application running on the first or the second device or they may be a metaverse application running on an execution logic.

The first and the second device may be user end devices such as stationary computers, laptops, mobile phones, tablet computers and so on. The applications may be web-applications or applications being executed natively on the first or second device. Alternatively, the first and the second application may be applications which are applications of the metaverse and are executed and running on an execution logic. The execution logic may be a decentralized network consisting of one or a plurality of computers being communicatively connected with each other.

The term "component" is to be understood as an asset which represents a subject of interest, such as clothes, furniture, machinery, or any elements of such subjects of interest. The term "metaverse component" is to be understood as a component which is created within a metaverse application. A "non-metaverse component" is a component which is created by an application outside the metaverse.

The term "component details data" refers to any descriptive information of the subject of interest, such as size, dimensions, color, surface topology, weight, and so on. With the component details data, the application is able to process the component in it, for example to output it on a display in any desired view of angle. If the application supports AR or VR, the component details data may be used to integrate the component in the respective AR or VR environment.

In step b), the component is processed by the first device executing the first application. The processing may result in changed component information. A change in the "component information" may be any change with respect to the component details data and/or metadata of the created component.

In step c), the component information in the data storage is updated.

The method of the invention provides an easy and straightforward method for providing computer-implemented seamless interoperability across applications inside and outside metaverse. To do so, the component state which is represented by the component information, i.e., the component details data and the metadata of the created component, is stored in the data storage and updated every time a change has been made by an executing device application, respectively.

If the component shall be processed with the same or a different device, status changes of the component can be tracked by reading the component information from the data storage, thereby providing all necessary information to the processing device and the application, which is executed by it, for further use. The data storage is thus used for identifying the component state and is used for synchronizing before allowing a user to proceed further. Once a component state is synchronized, a user can continue with the previous component state and thus has a unified experience. As a result, data can be integrated seamlessly across different devices and applications, respectively, within and outside metaverse.

According to a preferred embodiment, the metadata comprise at least of one the following information: an owner of the component; the last device on which the component information was updated; a time stamp of the last update of the component information; and a user identity information of the last update.

In a further preferred embodiment, updating the component information in the data storage is based on growing lists of records that are securely linked together. For example, a blockchain-based storage can be used. Thus, the data storage storing the component state (component information) can be used as a single source of truth.

In a further preferred embodiment, processing the component is executed by the execution logic that connects across the metaverse for the first and the second application. The execution logic may be, as mentioned above, a decentralized network. The execution logic connects across the metaverse for an application. This may be realized by a set of stateless services, subsets of which represent the components for different devices of VR and AR sections of the metaverse. As a result, each application can draw on the execution logic to function. The execution logic uses the data storage to make sure that the information is consistent across different applications and devices.

In a further preferred embodiment, reading and updating the component information is atomic in order to ensure that every data change in the component information will be updated in the data storage. This can be realized by a so-called pull state mechanism which is configured to verify a user and provide the latest component state across applications and devices. In other words, different application running on different devices can use the pull state mechanism to access the data storage.

In a further preferred embodiment, upon accessing the first and/or second application a user is verified by a user identification unit in order to update the user identity information when updating the component information in the data storage. The user identification unit may process a self-sovereign identity or a verifiable credential of a user. The robust and singular user identification unit enables that user can verify themselves across applications without having to provide their entire identity information. Thus, the component state can be maintained across devices of applications on metaverse. From a technical perspective, it is enough to prove that the component being edited belongs to the user with the provided credentials. This makes identity and component state management easy.

In a further preferred embodiment, the first and the second device may be the same device or they may be different devices. If the first and the second device are the same device, the above mentioned pull state mechanism may be bypassed as no changes to the component state have been made between to succeeding read operations. If the first and the second device are different devices the pull state mechanism as described above ensures provision of the latest component state across different applications.

In a further preferred embodiment, after having read the component information by the first application, it is verified whether an update has been made to the component information. This is beneficial if the component information has been stored by a different device, as mentioned above.

In a yet further preferred embodiment, processing the component information comprises displaying and/or outputting the component by the first device executing the first application, for example, in an AR or VR application.

Moreover, the invention refers to a system for computer-implemented provision of seamless interoperability across applications inside and outside metaverse where the system comprises an execution logic, a data storage and a user identification unit as central processing units and a first and a second device, where the components are configured to perform the method according to the invention or one or more preferred embodiments of the method according to the invention.

Moreover, the invention refers to a computer program product with a program code which is stored on a non-transitory machine-readable carrier, for carrying out the method according to the invention or one or more preferred embodiments thereof when the program code is executed on a computer.

An embodiment of the invention will now be described in detail with respect with the accompanying drawings.
- Fig. 1: is a schematic state transition diagram illustrating a first embodiment of the method of the present invention; and
- Fig. 2: is a schematic state transition diagram illustrating a second embodiment of the method of the present invention.

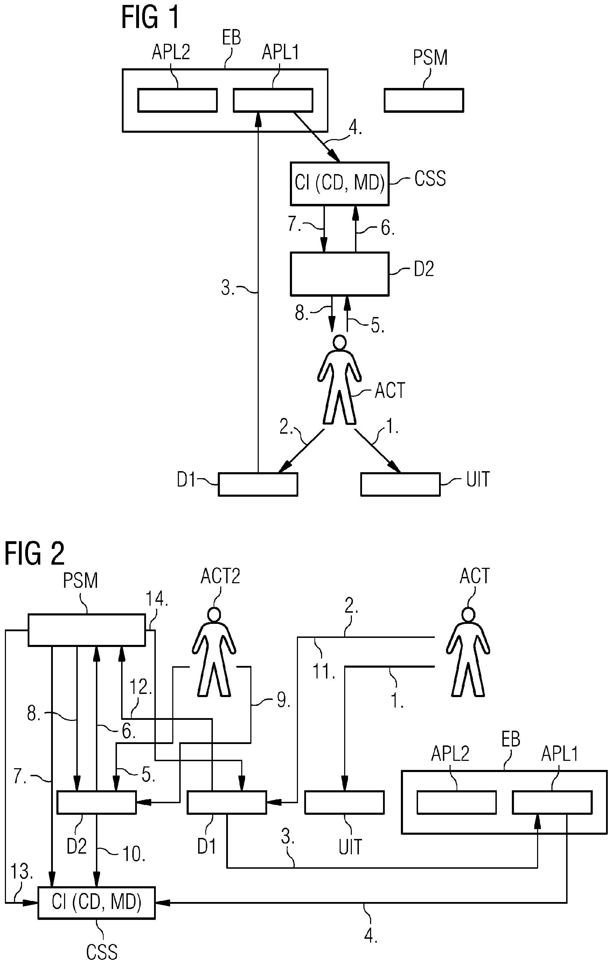

Figures 1 and 2 show a transition state diagram in which the components for participating and executing a method for providing computer-implemented seamless interoperability across applications of metaverse according to different embodiments are illustrated.

The components involved comprise an execution logic EB which may be realized as a decentralized network of one or a plurality of communicatively connected processing units. The execution logic EB connects across the metaverse for a first application APL1 and a second application APL2, by way of example only. The number of applications connected by the execution logic EB may be greater or less than two.

It is to be noted that the present examples are based on two applications APL1, APL2 inside metaverse. However, the principle can be transferred to one or more further applications being outside metaverse as well.

The applications APL1, APL2 represent a set of stateless services. They create and process a component for different devices (sometimes also referred to as instances) of VR and AR sections of metaverse. A component may be, for example, an asset such as an item of clothing, a machinery, a furniture or parts of them. Each of the applications APL1, APL2 can draw on the execution logic EB to function. The execution logic EB uses a common state storage as data storage CSS to ensure that information is consistent across the applications APL1, APL2.

The common state storage or data storage CSS stores, for each component, component information CI comprising component details data CD and metadata MD of a created component. The common state storage CSS may be an arbitrary data storage, such as a database or any other non-volatile memory.

Component details data CD comprise, for example, parameter and variables defining a component, such as dimensions, color, surface texture, and so on. The metadata MD comprise at least one of the following information: an owner of the component; a last device D1, D2 on which the component information CI was updated; a time stamp of the component information CI; and a user identity information UII of the last updater. The last updater may be the owner of a component or a user ACT of the application APL1 or APL2. The user ACT is sometimes also referred to as actor.

The devices D1, D2 may be user end devices such as stationary computers, laptops, mobile phones, tablet computers and so on. The applications APL1, APL2 may be web-applications or applications being executed directly on the devices D1, D2.

The component information CI corresponds to or represents a component state which will be stored and tracked for a created component using the metadata as described above. The component state will be tracked across the metaverse, i.e. across the different applications APL1, APL2 and any other applications outside the metaverse, if any. Since the user ACT should be able to access the component state across components, potentially at the same time, the data storage CSS storing the component information CI provides a single source of truth. For example, a blockchain-based storage might be used for that purpose.

A pull state mechanism PSM ensures that every operation (i.e. every component state update and component information update, respectively) will be atomic in the sense to ensure that every data change in the component information CI will be updated in the data storage CSS. The pull state mechanism PSM is used to access the data storage CSS to create an updated component information CI and to retrieve a respective component information CI upon a reading operation of one of the devices D1, D2. The pull state mechanism PSM is configured to verify the user ACT accessing the data storage CSS and providing the latest component state (i.e. component information CI) across the applications APL1, APL2. This means, the different applications APL1, APL2 use the pull state mechanism PSM to access the data storage CSS.

In order to get the knowledge which user ACT is accessing which component information CI, a common user identification unit UIT is provided. The user identification unit UIT can be a self-sovereign identity or comprise verifiable credentials. Thus, a robust and singular user identification unit UIT is provided. Using verifiable credentials provides the advantage that a user ACT can verify himself across applications APL1, APL2 without having to provide his entire identity information. From a technical perspective it is enough to prove that the component being edited belongs to the user ACT with the provided credential. This makes identity and component information management easier.

Fig. 1 shows a transition diagram according to a first embodiment illustrating creation and editing of a component by the user ACT. The user ACT is using two different devices D1 (e.g. a computer) and D2 (e.g. a VR device). In step 1., the user ACT is identified by means of the user identification unit UIT. After successful identification, in step 2., the user ACT creates a label (representing the component) using his first device D1. In step 3., the first device D1 connects to the first application APL1 to start creation of the label. The first application APL1 executed by the execution logic EB is configured to create the label. In step 4., the resulting component information CI is stored in the data storage CSS. The component information CI comprises, as mentioned above, the label being part of the component details data CD and metadata MD of the created component. The metadata MD comprise the owner of the component (user ACT), the last device on which the component information CI was updated (i.e., first device D1), a timestamp of the last update and a user identity information UII of the user ACT. As such, once the component information CI is created, it is stored in the data storage CSS along with the metadata MD.

In the present example, the component will be edited or updated by the same user ACT using a different, second device D2. In step 5., he requests to get the label of the component using the second device D2. The second device D2 requests the latest component state by reading the component information CI from the data storage CSS (step 6.). In step 7., the component information is returned to the device D2 and outputted (displayed) by the device D2 to the user ACT in step 8.

As editing of the component takes place in the same application APL1 where it was created, no changes are made to the component details data CD. However, the metadata MD have to be updated as the last access has been made by the second device D2 together with the new timestamp.

In case that the component stored in the data storage CSS is edited in a different instance of the metaverse the pull state mechanism PSM would have to fetch the component information CI from the data storage CSS in order to be able to track and update latest changes of the component details data CD. The updated component information CI would then have to be stored in the data storage CSS again.

Fig. 2 shows a second embodiment which reflects the situation where different users ACT and ACT2 access component information CI with different devices D1 and D2.

In step 1., user ACT is identified using the user identification unit UIT. After successful verification, the user ACT creates a label (representing the component) in step 2. using the first device D1. In step 3., label creation starts using the first application APL1 executed by the execution logic EB. In step 4., the first application APL1 updates the component information CI consisting of the component details data CD and the metadata MD and stores the component information CI in the data storage CSS.

Now, a different user ACT2 wants to access the component created by the first user ACT. In step 5., user ACT2 reads the component information CI using the second device D2. The second device D2 requests the component information in step 6. via pull state mechanism PSM. The pull state mechanism PSM requests or reads the component information CI in step 7. from the data storage CSS which returns it to the pull state mechanism PSM. In step 8., the component information (design) is delivered to the second device D2 of user ACT2.

In step 9., user ACT2 edits the component using the second device D2. The second device D2 updates the changed component information CI by storing relevant component details data CD and metadata MD in the data storage CSS (step 10.).

In step 11., first user ACT1 wants to read the component information CI using his device D1. First device D1 requests the component information CI in step 12. from the pull state mechanism PSM which receives the relevant component information CI from the data storage CSS in step 13. In step 14., the updated component is transmitted to the first device D1 where it is outputted to the user ACT for further use, for example an AR or VR application.

The principle is based on the constant call to the pull state mechanism PSM. For every operation, the pull state mechanism PSM is invoked to check changes in the component information CI. Every change in the component information CI will be reflected in the data storage CSS in a unique manner. Hence, if the first user ACT creates a component in the first device D1 (either in metaverse or outside) and saves it in the data storage CSS another user ACT2 can use it or test it in another environment or another application (either in metaverse or outside) using the pull state mechanism PSM to fetch the data from the data storage CSS. The second device D2 or a second application then displays the latest version of the component in the second application's context. This creates the possibility that changes in one application can be synchronized in real-time to show the changes in the second application.

This process works irrespective of whether it is started inside or outside metaverse and irrespective of the device it is started or transferred to because the execution logic EB and the data storage CSS ensure all instances can rely on the same data.

For example, if a user needs to make a decision about a component when outfitting a factory, he has several options about which machine to pick. Some of his options might be specific machines, some might be alternatives to it. His main interest is finding the right machine for his building that already exists. Currently, he must rely on machine dimensions or renderings of what it might look like in his factory.

With the present invention, there is a solution which allows him to simulate what things might look like in AR. The user can look at the machines that fit his specifications in the metaverse application, e.g. in VR, and the common execution logic EB connects to other applications. If the user is unsure whether it will truly work for his building and might want to check what it looks like in real life, a user can go to his factory floor. Because the data is stored in the data storage CSS, he opens the component on his mobile device, where he can look at it in augmented reality (AR) and see what it looks like in his building. This process is seamlessly integrated across the devices within an outside metaverse.

For example, the user might have been sent an email with some specification that he looks at on his phone before looking at options in augmented reality. Then he can continue an ordering process in metaverse. In all variations of the decision-making process, a user can seamlessly switch from one device to another, from one application to another and pick where he left off.

The invention provides the following advantages. A user can have seamless experience across metaverse. A user can create objects and designs in virtual reality and then experiencing them in real world simultaneously. This will allow a producer to design not only the interaction with the products once a customer has purchased them but already before he has done so. With blockchain-based data storages, all changes can be tracked and audited to identify participants. The tracking will allow users to feel secure in knowing that they are always accessing the most recent version irrespective of where they left things off.

Independent of the grammatical term usage, individuals with male, female or other gender identities are included within the term.

## Claims

1. Method for providing computer-implemented seamless interoperability across applications inside and outside metaverse, comprising the steps of:
a) reading, by a first device (D1) executing a first application (APL1), a component information (CI) from a data storage (CSS), where the component information (CI) has been created upon creation of a metaverse or non-metaverse component by a second application (APL2) executed by a second device (D2) and where the component information (CI) comprises component details data (CD) and metadata (MD) of the created component, the first and the second application (APL1, APL2) either being a non-metaverse application running on the first or second device (D1, D2) or being a metaverse application running on an execution logic (EB);
b) processing, by the first device (D1) executing the first application (APL1), the component, where the processing results in changed component information (CI);
c) updating the component information (CI) in the data storage (CSS).

2. Method according to claim 1, wherein the metadata (MD) comprise at least one of the following information:
- an owner of the component;
- the last device (D1, D2) on which the component information (CI) was updated;
- a timestamp of the last update of the component information (CI);
- a user identity information (UII) of the last updater.

3. Method according to claim 1 or 2, wherein updating the component information (CI) in the data storage (CSS) is based on growing lists of records that are securely linked together.

4. Method according to one of the preceding claims, wherein processing the component is executed by the execution logic (EB) that connects across the metaverse for the first and second application (APL1, APL2).

5. Method according to one of the preceding claims, wherein reading and updating the component information (CI) is atomic in order to ensure that every data change in the component information (CI) will be updated in the data storage (CSS).

6. Method according to one of claims 2 to 5, wherein upon accessing the first and/or second application (APL1, APL2) a user (ACT) is verified by a user identification unit (UIT), in order to update the user identity information (UII) when updating the component information (CI) in the data storage (CSS) .

7. Method according to one of claims 2 to 6, wherein the user identification unit (UIT) processes a self-sovereign identity or verifiable credential of the user (ACT).

8. Method according to one of the preceding claims, wherein the first and the second device (D1, D2) may be the same device or different devices.

9. Method according to one of the preceding claims, wherein, after having read the component information (CI) by the first application (APL1), it is verified whether an update has been made to the component information (CI).

10. Method according to one of the preceding claims, wherein processing the component information (CI) comprises displaying and/or outputting the component by the first device executing the first application (APL1).

11. A system for providing computer-implemented seamless interoperability across applications inside and outside metaverse, wherein the system comprises an execution logic (EB), a data storage (CSS), and a user identification unit (UIT) as central processing units and a first and a second device (D1, D2), the system being configured to perform the following steps:
a) reading, by the first device (D1) executing a first application (APL1), a component information (CI) from the data storage (CSS), where the component information (CI) has been created upon creation of a metaverse or non-metaverse component by a second application (APL2) executed by the second device (D2), where the component information (CI) comprises component details data (CD) and metadata (MD) of the created component, the first and the second application (APL1, APL2) either being a non-metaverse application running on the first or second device (D1, D2) or being a metaverse application application running on an execution logic (EB);
b) processing, by the first device (D1) executing the first application (APL1), the component, where the processing results in changed component information (CI);
c) updating the component information (CI) in the data storage (CSS).

12. System according to claim 11, wherein the system is configured to perform a method according to one of claims 2 to 10.

13. A computer program product with program code, which is stored on a non-transitory machine-readable carrier, for carrying out a method according to one of claims 1 to 10 when the program code is executed on a computer.
